# EUROPÄISCHE PATENTSCHRIFT

(11) **EP 1 610 038 B1**
(45) Veröffentlichungstag und Bekanntmachung des Hinweises auf die Patenterteilung: **16.02.2011**
(21) Anmeldenummer: 04102832.5
(22) Anmeldetag: 21.06.2004
(51) Int. Cl.: F16H 61/688, F16H 3/00

(54) **Doppelkupplungsgetriebe und Verfahren zur Steuerung eines Doppelkupplungsgetriebes**
Double clutch transmission and control method of a double clutch transmission
Transmission à double embrayage et methode de controle d'une transmission à double embrayage

(43) Veröffentlichungstag der Anmeldung: 28.12.2005
(73) Patentinhaber: Getrag Ford Transmissions GmbH, 50725 Köln (DE)
(72) Erfinder: Leibbrandt, Martin, Dr., 50181 Bedburg (DE); Hegerath, Andreas, 50126 Bergheim (DE); Eggert, Ulrich, 41751 Viersen (DE); Küster, Thomas, 50931 Köln (DE)
(74) Vertreter: Dörfler, Thomas

(56) Entgegenhaltungen:
- EP-A- 0 845 618
- EP-A- 1 270 301
- WO-A-00/26559
- DE-A- 19 850 549
- FR-A- 1 445 735
- US-A1- 2002 088 288

## Beschreibung

Die Erfindung betrifft ein Doppelkupplungsgetriebe mit zwei Eingangswellen und wenigstens einer Ausgangswelle sowie ein Verfahren zum Steuern des Getriebes.

Doppelkupplungsgetriebe sind aus dem Fahrzeugbau bekannt. Beispielsweise ist in der DE 199 50 679 A1 ein Doppelkupplungsgetriebe offenbart, bei dem zwischen den Eingangswellen und der Ausgangswelle mehrere Zahnradpaare mit zugeordneten Gangschaltkupplungen angeordnet sind. Bei einer geschlossenen Gangsschaltkupplung überträgt das betreffende Zahnradpaar ein Drehmoment zwischen einer der Eingangswellen und der Ausgangswelle, wobei jedes Zahnradpaar ein bestimmtes Übersetzungsverhältnis zwischen Eingangswelle und Ausgangswelle definiert. Das Doppelkupplungsgetriebe umfaßt zwei Kupplungen, durch die sich jeweils eine Eingangswelle mit einer Kurbelwelle eines Verbrennungsmotors verbinden läßt.

Bei dem in der DE 199 50 679 A1 offenbarten Doppelkupplungsgetriebe besteht ein Zahnradpaar aus einem Festrad und einem das Festrad kämmenden Losrad. Das Losrad kann über die zugeordnete Gangschaltkupplung drehfest mit der das Losrad tragenden Welle verbunden werden. Zum Einrücken oder Schließen der Gangschaltkupplung bedarf es einer Synchronisation von Gangschaltkupplung und Losrad, das heißt, Gangschaltkupplung und Losrad müssen die gleiche Drehzahl aufweisen.

Für die Synchronisation ist ein eine Elektromaschine umfassender Hilfsantrieb vorgesehen, der mittels einer Umschaltvorrichtung entweder mit der einen Eingangswelle oder mit der anderen Eingangswelle in Wirkverbindung steht. Ist eine der beiden Eingangswellen von dem Verbrennungsmotor getrennt, läßt sich diese durch den Hilfsantrieb auf eine bestimmte Drehzahl bringen. Damit werden die Drehzahlen der betreffenden Eingangswelle und der Ausgangswelle so aufeinander abgestimmt, daß das Losrad und die zugeordnete Gangschaltkupplung sich mit gleicher Drehzahl drehen. Der Hilfsantrieb ersetzt somit die konventionellen Synchronisationseinheiten, lediglich deren sogenannte Docking-Teile sind für eine formschlüssige Verbindung weiterhin notwendig.

Auch die DE 101 33 695 A1 offenbart ein Doppellkupplungsgetriebe mit einem Hilfsantrieb, der eine Elektromaschine umfaßt. Auch hier wird die Elektromaschine eingesetzt, eine Welle in dem Getriebe bis zu einer Synchronisationsdrehzahl zu beschleunigen beziehungsweise abzubremsen, so daß eine entsprechende Gangschaltkupplung eingreifen kann.

Um bei einem der oben beschriebenen Doppelkupplungsgetrieben einen Gangwechsel vorzunehmen, sind die beiden Kupplungen zu betätigen, die zwischen den Eingangswellen und der Verbrennungsmotor angeordnet sind. Die Kupplungen sind dabei als Rutschkupplungen ausgebildet, wobei das Moment des Verbrennungsmotors bei einem Schaltvorgang von einer Kupplung auf die andere Kupplung übergeblendet wird. Bei dieser Überblendung arbeiten beide Kupplungen im Schlupfbetrieb, was sich auf den Kraftstoffverbrauch des Verbrennungsmotors entsprechend niederschlägt. Des weiteren müssen die Drücke zwischen den Reibelementen der einzelnen Kupplungen beim Überblenden genau aufeinander abgestimmt werden, damit ein möglichst ruckfreies Schalten zwischen den Eingangswellen möglich ist.

Üblicherweise sind die oben erwähnten Rutschkupplungen als hydraulisch betätigte Nasskupplungen ausgebildet, so daß eine Hydraulik mit Hydraulikpumpe zum Schalten der Kupplungen beziehungsweise zum Kühlen der Kupplungsbauteile notwendig ist. Insbesondere bei höheren Geschwindigkeiten kann die Hydraulikpumpe viel Energie verbrauchen, was sich auf den Kraftstoffverbrauch des Fahrzeuges ebenfalls niederschlägt.

Die gattungsgemässe EP 0 845 618 A2 offenbart ein Doppelkupplungsgetriebe mit zwei Eingangswellen, zwei Kupplungen und mit einem Hilfsantrieb, wobei die Eingangswellen über den Hilfsantrieb miteinander verbunden sind. Die Kupplungen sind dabei als formschlüssige Kupplungen ausgebildet. Die zwei Eingangswellen sind mit dem Hilfsantrieb über ein Planetengetriebe verbunden, welches den Aufbau des Doppelkupplungsgetriebes aufwändiger macht und welches Einfluß auf den Getriebewirkungsgrad hat.

Der Erfindung liegt daher die Aufgabe zu Grunde, ein Doppelkupplungsgetriebe bereitzustellen, das einen hohen Getriebewirkungsgrad aufweist und vergleichsweise einfach aufgebaut ist.

Die Aufgabe wird durch die Merkmalskombination gemäß Ansprüchen 1 und 19 gelöst. Ausführungsbeispiele können den von Ansprüchen 1 und 13 abhängigen Unteransprüchen entnommen werden.

Erfindungsgemäß sind die Kupplungen als formschlüssige Kupplungen ausgebildet, wobei durch den Hilfsantrieb die Drehzahl der einen oder der anderen Eingangswelle mit der Drehzahl des Motors synchronisierbar ist. Laufen Abtriebswelle und einzukoppelnde Eingangswelle mit gleicher Drehzahl, läßt sich eine formschlüssige Kupplung mit kleiner Kraft einrücken, sodaß im Gegensatz zu den üblicherweise eingesetzten Rutschkupplungen auf eine entsprechende Hydraulik verzichtet werden kann. Auch ist eine Kühlung der Kupplungsbauteile nicht mehr notwendig, da ein Schlupfbetrieb mit Wärmeentwicklung ausgeschlossen ist.

Des Weiteren ist vorgesehen, daß der Hilfsantrieb zwei Antriebseinheiten umfaßt, die jeweils einer Eingangswelle zugeordnet sind. Die Antriebseinheiten können dabei mit zueinander unterschiedlichen Drehzahlen betrieben werden. Die Antriebseinheiten umfassen zweckmäßig jeweils eine Elektromaschine, die sowohl als Elektromotor als auch als Generator betrieben werden kann. Beispielsweise können beide Antriebseinheiten gleichzeitig als Elektromotor oder gleichzeitig als Generator eingesetzt werden. Auch ist es möglich, daß eine Antriebseinheit motorisch betrieben wird, während die andere Antriebseinheit als Generator zum Einsatz kommt. Somit lassen sich die Antriebseinheiten unabhängig voneinander steuern.

In einem bevorzugten Ausführungsbeispiel kann der Hilfsantrieb in zwei entgegengesetzte Richtungen ein Drehmoment abgeben. So kann der Hilfsantrieb einerseits genutzt werden, die eine und/oder die andere Eingangswelle zum Zwecke des Einrückens einer formschlüssigen Kupplung zu beschleunigen. Andererseits kann ein Rückwärtsfahren des Fahrzeugs durch den hilfsantrieb erfolgen, wobei zur Übertragung des Drehmomentes ein Zahnradpaar gewählt wird, das üblicherweise einem Vorwärtsgang zugeordnet ist. Somit kann im Doppelkupplungsgetriebe auf einen gesonderten Rückwärtsgang verzichtet werden.

Ein Zahnradpaar besteht in einem bevorzugten Ausführungsbeispiel aus einem mit einer ersten Welle drehfest verbundenen Festrad und aus einem mit dem Festrad kämmenden Losrad, das mit der zweiten Welle drehfest verbunden werden kann. Die erste Welle kann eine Eingangswelle oder die Ausgangswelle sein. Vorzugsweise sind alle Zahnradpaarungen so ausgebildet, daß deren jeweiligen Losräder auf einer Welle drehen.

Ein Losrad läßt sich zweckmäßigerweise über eine zugeordnete Gangschaltkupplung mit der zweiten Welle drehfest verbinden, wobei die Gangschaltkkupplungen als unsynchronisierte, formschlüssige Kupplungen ausgeführt sind. Dies führt zu einem Getriebe mit vergleichsweise einfachem Aufbau. Auch die zwischen den Eingangswellen und dem Motor angeordneten Kupplungen können als Klauenkupplung ausgeführt sein.

Die Synchronisierung einer Gangschaltkupplung mit einem zugehörigen Losrad kann wiederum durch den Hilfsantrieb beziehungsweise durch dessen Antriebseinheiten erfolgen. Beispielsweise kann eine Antriebseinheit über eine Eingangswelle und über ein daran drehfest befestigtes Festrad ein mit dem Festrad kämmendes Losrad beschleunigen, bis dieses die Drehzahl der Ausgangswelle beziehungsweise der Gangschaltkupplung erreicht hat, um damit die Voraussetzung für ein Einrücken der formschlüssigen Gangschaltkupplung zu schaffen.

Vorzugsweise steht eine Antriebseinheit in Wirkverbindung mit einem Festrad, das auf einer Eingangswelle drehfest angebracht ist. Das Festrad kann dabei auch Teil einer Zahnradpaarung zur Bildung einer Gangstufe sein. Die Antriebseinheit kann jedoch auch durch jede andere getrieblichen Verbindung mit der Eingangswelle verbunden sein, z.B. Riemenantrieb oder Kettenantrieb. Oder die Antriebseinheit ist direkt mit der Eingangswelle verbunden, z.B. ist der Rotor der Antriebseinheit direkt an die Eingangswelle angekoppelt, oder die Eingangswelle ist als Rotor der Antriebseinheit ausgebildet.

In einem bevorzugten Ausführungsbeispiel sind die Eingangswellen koaxial angeordnet, wobei eine Eingangswelle als Hohlwelle und die andere Eingangswelle als Innenwelle ausgebildet ist. Das Doppelkupplungsgetriebe kann den Aufbau eines deaxialen Zweiwellengetriebes aufweisen, wobei die Ausgangswelle parallel zu den Eingangswellen verläuft und wobei Getriebeeingang und Getriebeausgang auf einer Getriebeseite angeordnet sein können.

Vorzugsweise ist einer Eingangswelle eine Gruppe von Gangstufen zugeordnet, die beispielsweise den ersten, dritten und fünften Gang eines Sechsganggetriebes umfaßt. Der anderen Eingangswelle zugeordnet sind dann die Gänge 2, 4 und 6, so daß ein Hochschalten oder Runterschalten zwischen benachbarten Gangstufen immer mit einem Wechsel der momentenführenden Eingangswelle verbunden ist.

Aufgrund der Synchronisation sowohl der Kupplungen als auch der Gangschaltkupplungen durch den Hilfsantrieb sind die Betätigungskräfte zum Einrücken der jeweiligen Kupplungsbauteile gering. Daher können zum Betätigen der Kupplungen Aktuatoren zum Einsatz kommen, die in Vorgelegegetrieben mit konventionellen Rutschkupplungen und herkömmlichen Synchronisationseinheiten nicht verwendet werden können. Vorzugsweise erfolgt die Schaltung oder Betätigung der Kupplungen durch elektromechanische und/oder elektromagnetische Aktuatoren. Zum Beispiel können in zwei Richtungen wirkende Hubmagnete verwendet werden, die zusammen mit einer Arretiervorrichtung die Kupplungen betätigen und im betätigten Zustand energielos halten können. Auch können die Kupplungen geschaltete Freiläufe umfassen, wie sie in der DE 199 33 242 A1 beschrieben werden.

In einem bevorzugten Ausführungsbeispiel kann ein Energiespeicher vorgesehen sein, der den Hilfsantrieb zumindest kurzfristig mit Energie versorgt. Die Kapazität des Energiespeichers weist zweckmäßig mindestens 10 Wh auf, vorzugsweise mindestens 15 Wh, um für einige Sekunden eine ausreichend hohe Leistung zur Verfügung zu stellen. Umfaßt der Hilfsantrieb eine oder mehrere Elektromaschinen, ist der Energiespeicher vorzugsweise als NiMH-Batterie ausgebildet. Eine andere vorteilhafte Möglichkeit der Energiespeicherung besteht in der Verwendung von UltraCaps. UltraCaps sind Doppelschichtkondensatoren und zeichnen sich durch einen niedrigen Innenwiderstand bei gleichzeitig hoher spezifischer Kapazität aus. Im Gegensatz zu Batterien, die Energie durch Umwandlung chemischer Verbindungen speichern, beruht die Wirkung des Doppelschichtkondensators auf einer Verschiebung von lonen im elektrischen Feld.

Da bei dem erfindungsgemäßen Doppelkupplungsgetriebe keine Rutschkupplungen zur Verfügung stehen, müssen alle Betriebszustände, bei denen das Drehmoment normalerweise über einer schlupfende Kupplung übertragen wird, von dem Hilfsantrieb abgedeckt werden. Als zweckmäßig hat sich ein Hilfsantrieb mit einer Leistung über 25 kW erwiesen. So beträgt die Leistung jeder der zwei Antriebseinheiten vorzugsweise 15 kW.

Das Verfahren zur Steuerung des erfindungsgemäßen Doppelkupplungsgetriebes ist dadurch gekennzeichnet, daß bei einer Schaltung von einem Quellgang, der einer ersten Welle zugeordnet ist, in einen Zielgang, der einer zweiten Eingangswelle zugeordnet ist, zunächst die zweite Eingangswelle auf eine entsprechende Synchrondrehzahl der dem Zielgang zugeordneten Gangschaltkupplung gebracht wird. Dies bedeutet bei dem Ausführungsbeispiel mit mehreren aus Festrad und Losrad bestehenden Zahnradpaarungen, daß die zweite Eingangswelle gerade so schnell dreht, daß das Losrad die gleiche Drehzahl wie die zugehörige Gangschaltkupplung aufweist. Danach ist die dem Zielgang zugeordnete Gangschaltkupplung zu schließen. Es folgt nun die Übernahme des an der Ausgangswelle anliegenden Drehmoments durch den Hilfsantrieb. Anschließend wird die Drehzahl der Antriebswelle des Motors auf die Drehzahl der zweiten Eingangswelle gebracht, so daß letztlich die Kupplung zwischen dem Motor und der zweiten Eingangswelle geschlossen werden kann. Nach erfolgter Betätigung der Kupplung übernimmt der Motor wieder die Deckung des Drehmomentes an der Ausgangswelle des Getriebes.

Vorzugsweise wird nach der Übernahme des Drehmomentes an der Ausgangswelle durch den Hilfsantrieb die Gangschaltkupplung des Quellgangs gelöst. Ist die Kupplung zwischen der ersten Eingangswelle und der Antriebswelle des Motors weiter geschlossen, kann über den Hilfsantrieb die Antriebswelle des Motors auf die Drehzahl der zweiten Eingangswelle gebracht werden. Zusätzlich kann durch eine Motorsteuerung der Motor auf die Drehzahl der zweiten Eingangswelle geführt werden.

Alternativ kann ausschließlich die Motorsteuerung den Motor auf die gewünschte Drehzahl führen. Somit kann die gesamte Leistung des Hilfsantrieb dazu verwendet werden, das beim Schaltvorgang an der Ausgangswelle anliegende Drehmoment zu übernehmen.

Zum Starten des (Verbrennungs-)Motors wird zunächst eine der Eingangswellen auf Null abgebremst, soweit sich diese Eingangswelle dreht. Danach wird die Kupplung zwischen der abgebremsten Eingangswelle und dem noch stillstehenden Motor geschlossen. Der mit der Eingangswelle in Wirkverbindung stehende Hilfsantrieb wirft dann den Motor an.

Zum Anfahren des Kraftfahrzeugs wird vorzugsweise die Kupplung zwischen Motor und zumindest einer der Eingangswellen getrennt. Um ein Drehmoment zwischen der vom Motor getrennten Eingangswelle und der Ausgangswelle zu übertragen, wird eine Gangschaltkupplung eines der getrennten Eingangswelle zugeordneten Gangstufe eingerückt. Durch den mit der getrennten Eingangswelle in Wirkeingriff stehenden Hilfsantrieb wird die Ausgangswelle angetrieben, so daß sich das Kraftfahrzeug in Bewegung setzt.

Die Kupplung zwischen der anderen Eingangswelle und der Abtriebswelle des Motors kann geschlossen sein. Steht der Motor still, kann ein Teil der Leistung des Hilfsantrieb verwendet werden, den Motor anzuwerfen, während der andere Teil der Leistung des Hilfsantrieb für das Anfahren des Fahrzeugs benötigt wird.

Läuft der Motor bereits, kann die Leistung des Hilfsantriebs für das Anfahren durch den Motor generiert werden. Wenn der Hilfsantrieb beispielsweise zwei Elektromaschinen umfaßt, wird eine Elektromaschine zum Anfahren des Kraftfahrzeugs motorisch betrieben, wobei die durch den Motor angetriebene zweite Elektromaschine als Generator arbeitet und den Strom für die erste Elektromaschine liefert.

Alternativ können die Kupplungen zwischen den Eingangswellen und dem Motor getrennt sein. Dies hat den Vorteil, daß die gesamte Leistung des Hilfsantriebs zum Anfahren verwendet werden kann. Die dazu notwendige Energie kann dem Kurzzeitspeicher entnommen werden. Erreicht eine der Einganswellen die Drehzahl des laufenden Motors, kann die zugeordnete Kupplung geschlossen werden, so daß das Drehmoment zum Überwinden des Fahrwiderstands nun vom Motor geliefert wird.

Vorzugsweise wird das Doppelkupplungsgetriebe so gesteuert, daß beim Rückwärtsfahren das Kraftfahrzeug durch den Hilfsantrieb angetrieben wird, wobei der Hilfsantrieb in umgekehrter Richtung läuft und eine der für die Vorwärtsfahrt des Fahrzeugs zur Verfügung stehenden Gangstufe genutzt wird. Somit kann beim Doppelkupplungsgetriebe der Rückwärtsgang eingespart werden.

In einer weiteren vorteilhaften Ausführung wird die benötigte Leistung für den Antrieb der Rückwärtsfahrt zumindest teilweise erzeugt, indem der andere Hilfsantrieb mit dem Motor verbunden ist, dieser die benötigte Leistung generatorisch erzeugt und diese Energie dem Hilfsantrieb, der die Rückwärtsfahrt bewirkt, zu Verfügung gestellt wird. In diesem Fall ist eine unbegrenzte Rückwärtsfahrt ohne oder kleinem Energiespeicher bzw. ohne oder geringer Energiespeicherung möglich, da die benötigte Energie unmittelbar generatorisch erzeugt wird entsprechend dem unmittelbar benötigten Leistungsbedarf für die Rückwärtsfahrt.

Beim Bremsen des Fahrzeuges kann kinetische Energie gespeichert werden, indem der Hilfsantrieb als Generator verwendet wird. Diese gespeicherte Energie kann zur Unterstützung des Motors verwendet werden, sodaß zumindest kurzfristig dem Kraftfahrzeug eine höhere Leistung zur Verfügung steht.

Anhand des in den Figuren dargestellten Ausführungsbeispiel wird die Erfindung näher erläutert. Es zeigen:
- Fig. 1: ein Antriebsschema eines Doppelkopplungsgetriebes; und
- Fig. 2: ein Doppelkupplungsgetriebe als Sechsganggetriebe.

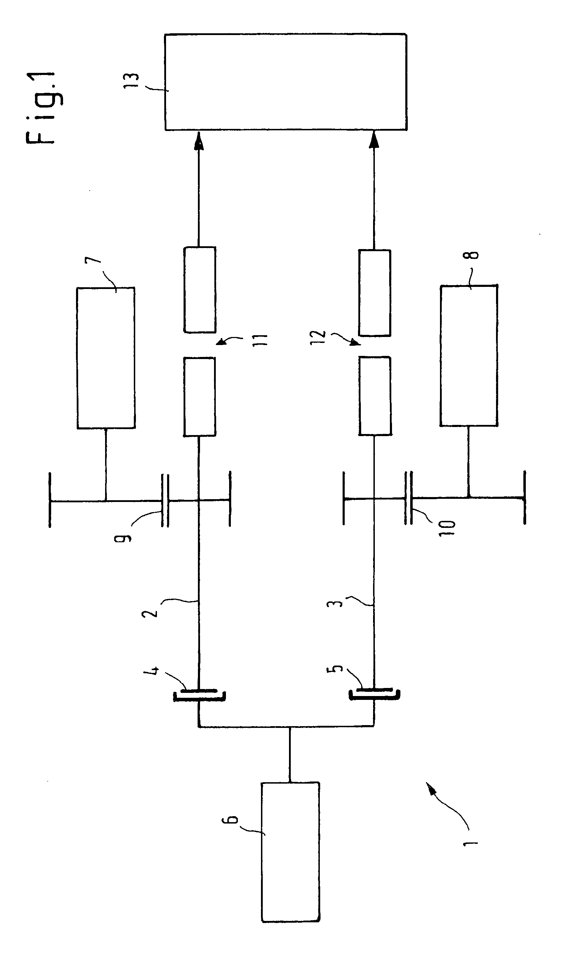

Fig. 1 zeigt ein Antriebsschema eines Doppelkupplungsgetriebes, das in seiner Gesamtheit mit 1 bezeichnet wird und als automatisiertes Schaltgetriebe in einem Kraftfahrzeug eingesetzt werden kann. Das Doppelkupplungsgetriebe 1 weist zwei Eingangswellen 2 und 3 auf, die jeweils durch eine Kupplung 4, 5 mit einem Motor 6 verbunden sind. Jeder Eingangswelle 4, 5 ist eine Antriebseinheit 7, 8 eines Hilfsantriebs zugeordnet. Über ein schematisch dargestelltes Zahnradpaar 9 ist die Antriebseinheit 7 mit der Eingangswelle 2 verbunden. Die Antriebseinheit 8 ist über ein Zahnradpaar 10 mit der Eingangswelle 3 verbunden.

Jeder Eingangswelle 2, 3 ist jeweils eine Gruppe 11, 12 von schaltbaren Gangstufen zugeordnet, die in Fig. 1 stark schematisiert als zwei nebeneinander liegende Rechtecke abgebildet sind. Dabei umfaßt die Gruppe 11 bei einem unterstellten Sechsganggetriebe den 1, 3. und 5. Gang, während die Gruppe 12 den 2, 4. und 6. Gang beinhaltet. Eine derartige alternierende Aufteilung der Gänge führt dazu, daß bei einer Schaltung von einem Gang in einen benachbarten Gang das Drehmoment von einer Eingangswelle auf die andere Eingangswelle wechselt.

Die von dem Motor 6 beziehungsweise von den Antriebseinheiten 7, 8 abgegebene Leistung wird zur Überwindung des Fahrwiderstands benötigt, der hier durch ein Rechteck 13 symbolisiert ist. Zu betonen ist, daß die Antriebseinheiten 7, 8 auch Leistung aufnehmen können, wenn beispielsweise das Fahrzeug abgebremst wird.

Die Antriebseinheiten 7, 8 des Hilfsantriebs können voneinander autark betrieben werden. Das heißt zum einen, daß sie einzeln oder gleichzeitig mit unterscheidlichen Drehzahlen betrieben werden können. Zum anderen kann eine Antriebseinheit Leistung abgeben, während die andere Antriebseinheit Leistung gleichzeitig aufnimmt und beispielsweise in elektrische Energie umwandelt.

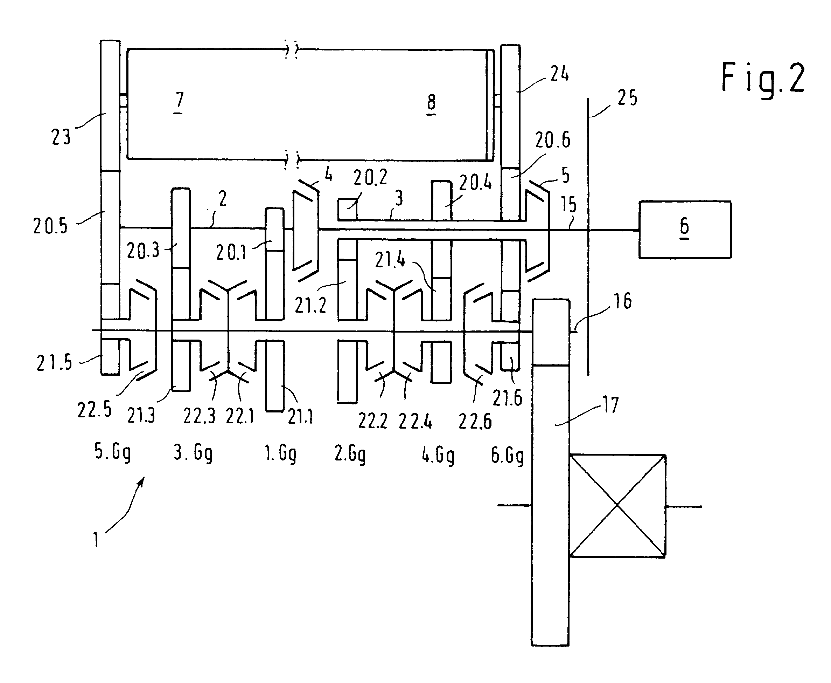

Fig. 2 zeigt ein Schema eines Doppelkupplungsgetriebes 1 als Sechsganggetriebe. Das Doppelkupplungsgetriebe 1 ist als Vorgelegegetriebe ausgebildet, bei dem an einer Getriebeseite 14 der Getriebeeingang 15 und der Getriebeausgang 16 achsversetzt angeordnet sind. Dem Getriebeausgang 16 schließt sich ein Achsgetriebe 17 an, das in einem nicht dargestellten Getriebegehäuse integriert sein kann.

Die Eingangswellen 2, 3 sind koaxial angeordnet, wobei die Eingangswelle 2 als Innenwelle und die Eingangswelle 3 als Hohlwelle ausgeführt ist. Die zwischen den Eingangswellen 2, 3 angeordneten formschlüssigen Kupplungen 4, 5 sind jeweils als Konus dargestellt. Parallel zu den Eingangswellen 2, 3 verläuft eine Ausgangswelle 18, an der an dem Getriebeausgang 16 ein Zahnrad drehfest befestigt ist.

Zwischen den Eingangswellen 2, 3 und der Ausgangswelle sind sechs Zahnradpaare geschaltet, die jeweils aus einem Festrad 20.1 bis 20.6 und aus einem das entsprechende Festrad kämmende Losrad 21.1 bis 21.6 bestehen. Dabei bildet ein Festrad und ein Losrad eines Zahnradpaares eine Gangstufe beziehungsweise einen Gang des Sechsganggetriebes. Beispielsweise bildet das Festrad 20.5 und das Losrad 21.5 den 5. Gang des Doppelkupplungsgetriebes 1.

Die Festräder 20.1, 20.3 und 20.5 sind drehfest mit der Eingangswelle 2 verbunden, während die Festräder 20.2, 20.4 und 20.6 drehfest mit der Eingangswelle 3 verbunden sind. Die Lösräder 21.1 bis 21.6 sind drehbar, jedoch axial nicht verschiebbar auf der Ausgangswelle 18 gelagert. Jedem Losrad 21.1 bis 21.6 ist eine Gangschaltkupplung 22.1 bis 22.6 zugeordnet, die jeweils als eine formschlüssige Klauenkupplung ausgeführt ist und nur den sogenannten Docking-Teil einer konventionellen Synchronisationseinheit enthält. Wie auch die Kupplungen 4 und 5 sind die Gangschaltkupplungen 22.1 bis 22.6 jeweils als Konus dargestellt.

Die Antriebseinheiten 7 und 8 sind als Elektromaschinen ausgebildet und sind in der Darstellung der Fig. 2 hintereinander angeordnet. Die Elektromaschine 7 steht über ein Festrad 23 mit der Eingangswelle 2 in Wirkverbindung, wobei das Festrad 23 mit de, Festrad 20.5 kämmt. Die Elektromaschine 8 wirkt über ein Festrad 24, das mit dem Festrad 20.6 kämmt, mit der Eingangswelle 3 zusammen.

Über in der Fig. 2 nicht dargestellte Aktuatoren lassen sich die einzelnen Gangschaltkupplungen 22.1 bis 22. 6 schließen und öffnen. Dabei können die Aktuatoren Hubmagnete umfassen, da die Einrückkräfte im Vergleich zu konventionellen Synchronisationseinheiten klein sind. Auch die Kupplungen 4, 5 lassen sich elektromechanisch bzw. elektromagnetisch betätigen, da große Einrückkräfte nicht notwendig sind.

Am Getriebeeingang 15 ist der als Verbrennungsmotor ausgebildete Motor 6 und ein Schwungrad 25 angeordnet. Um den Verbrennungsmotor 6 zu starten, wird beispielsweise die Kupplung 5 bei nicht rotierender Eingangswelle 3 geschlossen, wobei die Gangschaltkupplungen 22.2, 22.4 und 22.6 jeweils geöffnet sind, sodaß die Losräder 21.2, 21.4 und 21.6 sich auf der Ausgangswelle 18 drehen können. Über das Festrad 24 und das Festrad 20.6, die Eingangswelle 3 und die Kupplung 5 wirft die Elektromaschine den Verbrennungsmotor 6 an. Danach kann die Kupplung 5 wieder geöffnet werden. Analog kann auch die Elektromaschine 7 den Verbrennungsmotor 6 anwerfen, wobei in diesem Fall die Kupplung 4 zuvor zu schließen ist.

Um das Kraftfahrzeug in Bewegung zu versetzen, kann das Doppelkupplungsgetriebe wie folgt betrieben beziehungsweise gesteuert werden: Die Kupplung 4 ist geöffnet, so daß Verbrennungsmotor und Eingangswelle 2 voneinander getrennt sind. Die Elektromaschine 7 treibt über das Festrad 23 und das Festrad 20.5 die Eingangswelle 2 an, die wiederum über das Festrad 20.1 das Losrad 21.1 und bei geschlossener Gangschaltkupplung 22.1 damit die Ausgangswelle 18 antreibt. Über das Achsgetriebe 17 werden die danach geschalteten Räder des Kraftfahrzeugs in Drehung versetzt; das Fahrzeug fährt an.

Die zum Antrieb der Elektromaschine benötigte Energie kann aus einem hier nicht dargestellten Kurzzeit-Energiespeicher entnommen werden. Alternativ ist es auch möglich, die notwendige elektrische Energie durch einen generatorischen Betrieb der Elektromaschine 8 zu entnehmen. In diesem Fall wird die Elektromaschine 8 von dem laufenden Verbrennungsmotor 6 mit einer vorzugsweise konstanten Drehzahl angetrieben, wobei der Antrieb über die zuvor zu schließende Kupplung 5 erfolgt. Es versteht sich, daß die Gangschaltkupplungen 22.2, 22.4 und 22.6 jeweils geöffnet sind, da die Drehzahl der Ausgangswelle 18 von der Drehgeschwindigkeit der Elektromaschine 7 abhängt und deshalb die Ausgangswelle 18 von der Eingangswelle 3 entkoppelt sein muß.

Ein Rückwärtsfahren des Fahrzeugs läßt sich mit dem Doppelkupplungsgetriebe 1 der Fig. 2 dadurch realisieren, daß zum Anfahren die Elektromaschine 7 im umgekehrten Drehsinn läuft. Auch hier kann die zum Antrieb der Elektromaschine 7 elektrische Leistung dem Kurzzeitspeicher entnommen werden oder die Elektromaschine 8 liefert als vom Motor 6 angetriebener Generator die notwendige Energie.

Auch ist es möglich, zum Anfahren beide Elektromaschinen 7, 8 als Antrieb zu verwenden, solange der Kurzzeitspeicher die dafür notwendige Energie liefern kann. Der Vorteil besteht darin, daß die gesamte elektrische Leistung beider Elektromaschinen zum Anfahren beziehungsweise zum Überwinden eines Losbrechmomentes eingesetzt werden. In diesem Fall sind die Kupplungen 4, 5 beide geöffnet und vorzugsweise die Gangschaltkupplung 22.1 und die Gangschaltkupplung 22.2 geschlossen. Aufgrund der unterschiedlichen Übersetzungsverhältnisse des aktivierten 1. und 2. Ganges drehen sich die Elektromaschinen mit unterschiedlicher Drehzahl. Ist das Kraftfahrzeug einmal ins Rollen gekommen, kann beispielsweise Elektromaschine 7 das gesamte Antriebsmoment übernehmen. Die Elektromaschine 8 bringt dann, nachdem die Gangschaltkupplung 22.2 wieder geöffnet wurde, die Eingangswelle 3 auf die Drehzahl des laufenden Verbrennungsmotors 6, um die Kupplung 5 einrücken zu können. Nun ist wieder ein generatorischer Betrieb der Elektromaschine 8 möglich. Erreicht die Eingangswelle 2 die Drehzahl des Verbrennungsmotors 6, kann die Kupplung 4 geschlossen werden, sodaß letztlich der Verbrennungsmotor das gesamte Drehmoment bereitstellen kann. Die Kupplung 5 kann jetzt wieder geöffnet werden, da die Elektromaschine 8 für den Antrieb der Elektromaschine 7 keine elektrische Leistung mehr liefern muß.

Im Folgenden wird exemplarisch für einen Schaltvorgang von einem Quellgang in einen Zielgang das Schalten vom 1. in den 2. Gang beschrieben. Es versteht sich, daß bei einem Schaltvorgang zwischen anderen Gängen entsprechend analoge Kupplungen, Bauteile etc. zu betätigen sind.

Um nun von dem 1. Gang in den 2. Gang zu schalten, wird zunächst die Eingangswelle 3 durch die Elektromaschine 8 auf eine Drehzahl beschleunigt, sodaß das mit dem Festrad 20.2 kämmende Losrad 21.2 mit gleicher Drehzahl rotiert wie die Ausgangswelle 18. Nun ist es möglich, die Gangschaltkupplung 22.2 zu schließen. Das für die ruckfreie Weiterfahrt des Kraftfahrzeugs notwendige Drehmoment kann nun von der Elektromaschine 8 übernommen werden. Danach kann die Gangschaltkupplung 22.1 geöffnet werden. Die Elektromaschine 7 führt jetzt bei unverändert geschlossener Kupplung 4 den Verbrennungsmotor auf die Drehzahl der Eingangswelle 3, sodaß die Kupplung 5 eingerückt werden kann. Der Verbrennungsmotor kann jetzt wieder die gesamte Fahrleistung des Kraftfahrzeugs übernehmen.

Der Vorteil der oben beschriebenen Steuerung zum Schalten des Doppelkupplungsgetriebes 1 besteht darin, daß kurze Schaltzeiten realisiert werden können, da die Elektromaschine 7 den Verbrennungsmotor schnell auf die Drehzahl der Eingangswelle 8 führt. Der Nachteil dieser Steuerung liegt darin, daß beim Schaltvorgang zum Auffüllen des Drehmomentes zur Überwindung des Fahrwiderstands des Fahrzeugs nur auf die Leistung einer Elektromaschine zurückgegriffen werden kann.

Eine alternative Steuerung zum Schalten des Doppelkupplungsgetriebe 1 von dem 1. in den 2. Gang sieht vor, daß beide Elektromaschinen 7, 8 das notwendige Drehmoment beim Schaltvorgang übernehmen. In diesem Fall sind beide Kupplungen 4, 5 zum Verbrennungsmotor 6 geöffnet, während die Gangschaltkupplungen 22.1 und 22.2 geschlossen sind. Über eine Motorsteuerung wird der Verbrennungsmotor ohne Hilfe einer Elektromaschine auf die Drehzahl geführt, die der Drehzahl der Eingangswelle 3 entspricht. Ist diese Drehzahl erreicht, wird die Kupplung 5 geschlossen, der Kraftfluß läuft nun vom Verbrennungsmotor 6 über die Eingangswelle 3 und über die Gangschaltkupplung 22.2 zur Ausgangswelle 18.

Um besondere Leistungsspitzen beispielsweise beim Beschleunigen des Kraftfahrzeugs abzudecken, kann der Verbrennungsmotor 6 durch eine oder durch beide Elektromaschinen 7, 8 unterstützt werden. Wird beispielsweise im 2. Gang das Kraftfahrzeug stark beschleunigt, kann die Elektromaschine 8 auf die lastführende Eingangswelle 3 zusätzlich ein Drehmoment abgeben. Um auch die Leistung der anderen Elektromaschine 7 zu nutzen, wird bei geöffneter Kupplung 4 die Eingangswelle 2 beschleunigt, damit einer der Gangschaltkupplungen 22.1 oder 22. 3 geschlossen werden kann. Beide Elektromaschinen 7, 8 können dann Drehmoment über die jeweilige Eingangswelle an die Ausgangswelle abgeben.

Weitere Fahrzustände, die ebenfalls durch das erfindungsgemäße Doppelkupplungsgetriebe 1 abgedeckt werden können, sind das regenerative Bremsen und das sogenannte Kriechen (Creep). Beim regenerativen Bremsen werden eine oder beiden Elektromaschinen als Generator verwendet, wobei das dazu notwendige Drehmoment von der Ausgangswelle 18 auf die Eingangswellen 2, 3 übertragen wird. Das Kriechen beziehungsweise sehr langsame Fahren kann wie das Anfahren über eine der Elektromaschine 7, 8 erfolgen, wobei vorzugsweise die andere Elektromaschine generatorisch betrieben wird und die notwendige elektrische Energie liefert.

Grundsätzlich aber nicht beansprucht kann auch bei Antriebssträngen mit nur einer Kupplung, bei denen gewöhnlich eine Rutschkupplung ein Schlupf zwischen einem Verbrennungsmotor und einer Eingangswelle eines Getriebes zuläßt, anstelle der Rutschkupplung eine formschlüssige Kupplung verwendet werden, wobei ein Hilfsantrieb bei geöffneter Kupplung die Drehzahlanpassung zwischen Verbrennungsmotor und Eingangswelle vornimmt und vorzugsweise während dieses Vorgangs ein Drehmoment an der Eingangswelle oder an einer Ausgangswelle des Getriebes zur Verfügung stellt. Weiterhin sind auch Getriebe mit drei oder mehr Eingangswellen denkbar. Die Anzahl der Hilfsantriebe und schaltbaren Kupplungen ist dann entsprechend größer.

### Bezugszeichenliste

- 1: Doppelkupplungsgetriebe
- 2: Eingangswelle
- 3: Eingangswelle
- 4: Kupplung
- 5: Kupplung
- 6: Motor
- 7: Antriebseinheit
- 8: Antriebseinheit
- 9: Zahnradpaar
- 10: Zahnradpaar
- 11: Gruppe von Gangstufen
- 12: Gruppe von Gangstufen
- 13: Fahrwiderstand
- 14: Seite
- 15: Getriebeeingang
- 16: Getriebeausgang
- 17: Achsgetriebe
- 18: Ausgangswelle
- 19: Festrad
- 20: Festrad (20.1 bis 20.6)
- 21: Losrad (21.1 bis 21.6)
- 22: Gangschaltkupplung (22.1 bis 22.6)
- 23: Festrad
- 24: Festrad
- 25: Schwungrad

## Patentansprüche

1. Doppelkupplungsgetriebe (1), insbesondere für ein Kraftfahrzeug, umfassend
- zwei Eingangswellen (2, 3);
- wenigstens eine Ausgangswelle (18);
- mehrere Zahnradpaare mit zugeordneten Gangschaltkupplungen (22.1 bis 22.6), wobei ein Zahnradpaar bei einer geschlossenen Gangschaltkuppplung ein Drehmoment zwischen einer der Eingangswellen (2, 3) und der Ausgangswelle (18) überträgt und eine Gangstufe des Getriebes darstellt:
- zwei Kupplungen (4, 5), wobei jeweils eine Kupplung (4, 5) im geschlossenen Zustand ein Drehmoment zwischen einem Motor (6) und einer der Eingangswellen (2, 3) überträgt: und
- einen Hilfsantrieb, der mit zumindest einer Eingangswelle (2, 3) in Wirkverbindung steht,
wobei die Kupplungen (4, 5) als formschlüssige Kupplungen ausgebildet sind und wobei durch den Hifsantrieb die Drehzahl der einen oder der anderen Eingangswelle (3, 4) mit der Drehzahl des Motors (6) synchronisierbar ist, **dadurch gekennzeichnet, daß** der Hilfsantrieb zwei Antriebseinheiten (7, 8) umfaßt, die jeweils einer Eingangswelle (2, 3) zugeordnet sind, wobei die Antriebseinheiten (7, 8) unabhängig voneinander steuerbar sind.

2. Doppelkupplungsgetriebe (1) nach Anspruch 1, **dadurch gekennzeichnet, daß** der Hilfsantrieb wenigstens eine Elektromaschine (7, 8) umfaßt.

3. Doppelkupplungsgetriebe (1) nach Anspruch 1 oder 2, **dadurch gekennzeichnet, daß** der Hilfsantrieb in zwei entgegengesetzte Richtungen ein Drehmoment abgeben kann.

4. Doppelkupplungsgetriebe (1) nach einem der Ansprüche 1 bis 3, **dadurch gekennzeichnet, daß** ein Zahnradpaar aus einem mit einer ersten Welle drehfest verbundenen Festrad (20.1 bis 20.6) und aus einem mit dem Festrad kämmenden Losrad (21.1 bis 21.6) besteht, das mit einer zweiten Welle drehfest verbindbar ist.

5. Doppelkupplungsgetriebe (1) nach Anspruch 4, **dadurch gekennzeichnet, daß** das Losrad (21.1 bis 21.6) über die zugeordnete Gangschaltkupplung (22.1 bis 22.6) mit der zweiten Welle verbindbar ist, wobei die Gangschaltkupplung (22.1 bis 22.6) als eine unsynchronisierte formschlüssige Kupplung ausgebildet ist.

6. Doppelkupplungsgetriebe (1) nach einem der Ansprüche 1 bis 5, **dadurch gekennzeichnet, daß** wenigstens eine der Kupplungen (4, 5) als Klauenkupplung ausgebildet ist.

7. Doppelkupplungsgetriebe (1) nach einem der Ansprüche 1 bis 6, **dadurch gekennzeichnet, daß** durch den Hilfsantrieb die Drehzahl einer Eingangswelle (2, 3) mit der Drehzahl der Ausgangsgswelle (18) synchronisierbar ist.

8. Doppelkupplungsgetriebe (1) nach einem der Ansprüche 1 bis 7, **dadurch gekennzeichnet, daß** der Hilfsantrieb mit einem Festrad (20.5, 20.6) in Wirkverbindung steht, das drehfest mit einer der Eingangswellen (2, 3) verbunden ist

9. Doppelkupplungsgetriebe (1) nach einem der Ansprüche 1 bis 8, **dadurch gekennzeichnet, daß** die Eingangswellen (2, 3) koaxial angeordnet sind, wobei eine Eingangswelle (3) als Hohlwelle und die andere Eingangswelle (2) als Innenwelle ausgebildet ist.

10. Doppelkupplungsgetriebe (1) nach einem der Ansprüche 1 bis 9, **dadurch gekennzeichnet, daß** der einen Eingangswelle (2) eine erste Gruppe (11) von Gangsstufen und der anderen Eingangswelle (3) eine zweite Gruppe (12) von Gangstufen zugeordnet ist.

11. Doppelkupplungsgetriebe (1) nach einem der Ansprüche 1 bis 10, **dadurch gekennzeichnet, daß** die Schaltung der Kupplungen (4, 5) und/oder der Gangschaltkupplungen (22.1 bis 22.6) elektromechanisch oder elektromagnetisch erfolgt.

12. Doppelkupplungsgetriebe (1) nach einem der Ansprüche 1 bis 11, **dadurch gekennzeichnet, daß** die Kupplungen (4, 5) und/oder die Gangschaltkupplungen (22.1 bis 22.6) geschaltete Freiläufe aufweisen.

13. Doppelkupplungsgetriebe (1) nach einem der Ansprüche 1 bis 12, **dadurch gekennzeichnet, daß** ein Energiespeicher vorgesehen ist, der den Hilfsantrieb zumindest kurzzeitig mit Energie versorgt.

14. Doppelkupplungsgetriebe (1) nach Anspruch 13, **dadurch gekennzeichnet, daß** der Energiespeicher eine Kapazität von mindestens 20 Wh aufweist.

15. Dopppelkupplungsgetriebe (1) nach Anspruch 13 oder 14, **dadurch gekennzeichnet, daß** der Energiespeicher eine NiMH-Batterie umfaßt.

16. Doppelkupplungsgetriebe (1) nach einem der Ansprüche 13 bis 15, **dadurch gekennzeichnet, daß** der Energiespeicher Hochleistungskondensatoren umfaßt.

17. Doppelkupplungsgetriebe (1) nach einem der Ansprüche 1 bis 16, **dadurch gekennzeichnet, daß** die Leistung des Hilfsantriebs zwischen 10 bis 70 kW, vorzugsweise 40 kW beträgt.

18. Doppelkupplungsgetriebe (1) nach einem der Ansprüche 1 bis 17, **dadurch gekennzeichnet, daß** die Leistung einer Antriebseinheit (7, 8) 15 kW beträgt.

19. Verfahren zur Steuerung des Doppelkupplungsgetriebes (1) nach einem der Ansprüche 1 bis 18, **dadurch gekennzeichnet, daß** bei einer Schaltung von einem einer ersten Eingangswelle zugeordneten Quellgang in einen einer zweiden Eingangswelle zugeordneten Zielgang mindestens folgende Verfahrensschritte vorgesehen sind:
- Beschleunigen oder Abbremsen der zweiten Eingangswelle auf eine Synchrondrehzahl entsprechend der Drehzahl der dem Zielgang zugeordneten Gangschaltkupplung;
- Schließen der dem Zielgang zugeordneten Gangsschaltkupplung;
- Übernahme des an der Ausgangswelle anliegenden Drehmoments durch den Hilfsantrieb;
- Öffnen der Kupplung, die den Motor (6) mit der ersten Eingangswelle verbunden hat;
- Führen des Motors (6) auf die Drehzahl der zweiten Eingangswelle; und
- Schließen der Kupplung zwischen dem Motor (6) und der zweiten Eingangswelle.

20. Verfahren nach Anspruch 19, **dadurch gekennzeichnet, daß** nach dem Schließen der Kupplung zwischen dem Motor (6) und der zweiten Eingangswelle die Gangsschaltkupplung des Quellgangs gelöst wird.

21. Verfahren nach Anspruch 19 oder 20, **dadurch gekennzeichnet, daß** der Motor (6) durch ein Motormanagement auf die Drehzahl der zweiten Eingangswelle geführt wird.

22. Verfahren nach einem der Ansprüche 19 bis 21, **dadurch gekennzeichnet, daß** durch den Hilfsantrieb der Motor (6) zuerst auf die Drehzahl der zweiten Eingangswelle geführt wird und dann die Kupplung, die den Motor (6) mit der ersten Eingangswelle verbunden hat, geöffnet wird.

23. Verfahren nach einem der Ansprüche 19 bis 22, **dadurch gekennzeichnet, daß** bei einem Start des Motors (6) folgenden Verfahrensschritte vorgesehen sind:
- Abbremsen einer Eingangswelle auf Null, soweit sich die Eingangswelle dreht;
- Schließen der Kupplung zwischen dem Motor (6) und der Eingangswelle; und
- Anwerfen des Motors durch den Hilfsantrieb.

24. Verfahren nach einem der Ansprüche 19 bis 23, **dadurch gekennzeichnet, daß** beim Anfahren des Kraftfahrzeugs folgende Verfahrensschritte vorgesehen sind:
- Trennen der Kupplung zwischen Motor (6) und zumindest einer der beiden Eingangswellen;
- Schließen einer Gangsschaltkupplung, sodaß ein Drehmoment zwischen der vom Motor (6) getrennten Eingangswelle und der Ausgangswelle übertragen wird.
- Antreiben der vom Motor (6) getrennten Eingangswelle durch den Hilfsantrieb.

25. Verfahren nach Anspruch 24, **dadurch gekennzeichnet, daß** die Kupplung zwischen der anderen Eingangswelle und der Abtriebswelle des Motors geschlossen ist

26. Verfahren nach Anspruch 24, **dadurch gekennzeichnet, daß** die Kupplung zwischen der anderen Eingangswelle und der Abtriebswelle des Motors erst nach Erreichen einer Drehzahl des Motors geschlossen wird.

27. Verfahren nach einem der Ansprüche 19 bis 26 **dadurch gekennzeichnet, daß** beim Rückwärtsfahren des Kraftfahrzeugs wenigstens eine Eingangswelle durch den Hilfsantrieb angetrieben wird.

28. Verfahren nach Anspruch 27, **dadurch gekennzeichnet, daß** die benötigte Leistung für die Rückwärtsfahrt zumindest teilweise durch den anderen Hilfsantriebe generatorisch zu Verfügung gestellt wird, indem der andere Hilfsantrieb fest mit dem Motor verbunden ist.

29. Verfahren nach einem der Ansprüche 19 bis 28, **dadurch gekennzeichnet, daß** beim Bremsen des Fahrzeugs der Hilfsantrieb Energie aufnimmt und diese Energie gespeichert wird.

## Claims

1. Double clutch gearbox (1), in particular for a motor vehicle, comprising
- two input shafts (2, 3);
- at least one output shaft (18);
- a plurality of gearwheel pairs with associated gearshift clutches (22.1 to 22.6), wherein a gearwheel pair with a closed gearshift clutch transmits a torque between one of the input shafts (2, 3) and the output shaft (18) and constitutes a gear stage of the gearbox;
- two clutches (4, 5), wherein in each case one clutch (4, 5), in the closed state, transmits a torque between an engine (6) and one of the input shafts (2, 3); and
- an auxiliary drive which is operatively connected to at least one input shaft (2, 3),
with the clutches (4, 5) being designed as positively locking clutches and with it being possible by means of the auxiliary drive for the rotational speed of one or the other input shaft (3, 4) to be synchronized with the rotational speed of the engine (6), **characterized in that** the auxiliary drive comprises two drive units (7, 8) which are assigned to in each case one input shaft (2, 3), with the drive units (7, 8) being controllable independently of one another.

2. Double clutch gearbox (1) according to Claim 1, **characterized in that** the auxiliary drive comprises at least one electric machine (7, 8).

3. Double clutch gearbox (1) according to Claim 1 or 2, **characterized in that** the auxiliary drive can output a torque in two opposite directions.

4. Double clutch gearbox (1) according to one of Claims 1 to 3, **characterized in that** a gearwheel pair is composed of a fixed gear (20.1 to 20.6), which is connected to a first shaft for conjoint rotation therewith, and a loose gear (21.1 to 21.6) which meshes with the fixed gear and which can be connected to a second shaft for conjoint rotation therewith.

5. Double clutch gearbox (1) according to Claim 4, **characterized in that** the loose gear (21.1 to 21.6) can be connected to the second shaft by means of the associated gearshift clutch (22.1 to 22.6), with the gearshift clutch (22.1 to 22.6) being designed as an unsynchronized positively locking clutch.

6. Double clutch gearbox (1) according to one of Claims 1 to 5, **characterized in that** at least one of the clutches (4, 5) is designed as a dog clutch.

7. Double clutch gearbox (1) according to one of Claims 1 to 6, **characterized in that** the rotational speed of an input shaft (2, 3) can be synchronized with the rotational speed of the output shaft (18) by means of the auxiliary drive.

8. Double clutch gearbox (1) according to one of Claims 1 to 7, **characterized in that** the auxiliary drive is operatively connected to a fixed gear (20.5, 20.6) which is connected to one of the input shafts (2, 3) for conjoint rotation therewith.

9. Double clutch gearbox (1) according to one of Claims 1 to 8, **characterized in that** the input shafts (2, 3) are arranged coaxially, with one input shaft (3) being designed as a hollow shaft and the other input shaft (2) being designed as an inner shaft.

10. Double clutch gearbox (1) according to one of Claims 1 to 9, **characterized in that** a first group (11) of gear stages is assigned to one input shaft (2) and a second group (12) of gear stages is assigned to the other input shaft (3).

11. Double clutch gearbox (1) according to one of Claims 1 to 10, **characterized in that** the clutches (4, 5) and/or the gearshift clutches (22.1 to 22.6) are shifted electromechanically or electromagnetically.

12. Double clutch gearbox (1) according to one of Claims 1 to 11, **characterized in that** the clutches (4, 5) and/or the gearshift clutches (22.1 to 22.6) have switched freewheels.

13. Double clutch gearbox (1) according to one of Claims 1 to 12, **characterized in that** an energy store is provided which at least briefly supplies the auxiliary drive with energy.

14. Double clutch gearbox (1) according to Claim 13, **characterized in that** the energy store has a capacity of at least 20 Wh.

15. Double clutch gearbox (1) according to Claim 13 or 14, **characterized in that** the energy store comprises an NiMH battery.

16. Double clutch gearbox (1) according to one of Claims 13 to 15, **characterized in that** the energy store comprises high-power capacitors.

17. Double clutch gearbox (1) according to one of Claims 1 to 16, **characterized in that** the power of the auxiliary drive is between 10 and 70 kW, and is preferably 40 kW.

18. Double clutch gearbox (1) according to one of Claims 1 to 17, **characterized in that** the power of a drive unit (7, 8) is 15 kW.

19. Method for controlling the double clutch gearbox (1) according to one of Claims 1 to 18, **characterized in that**, during a shift from a source gear assigned to a first input shaft into a target gear assigned to a second input shaft, at least the following method steps are provided:
- accelerating or braking the second input shaft to a synchronous rotational speed corresponding to the rotational speed of the gearshift clutch assigned to the target gear;
- closing the gearshift clutch assigned to the target gear;
- the auxiliary drive takes over the torque applied to the output shaft;
- opening the clutch which has connected the engine (6) to the first input shaft;
- adjusting the engine (6) to the rotational speed of the second input shaft; and
- closing the clutch between the engine (6) and the second input shaft.

20. Method according to Claim 19, **characterized in that**, after the closing of the clutch between the engine (6) and the second input shaft, the gearshift clutch of the source gear is disengaged.

21. Method according to Claim 19 or 20, **characterized in that** the engine (6) is adjusted to the rotational speed of the second input shaft by means of an engine management system.

22. Method according to one of Claims 19 to 21, **characterized in that**, by means of the auxiliary drive, the engine (6) is firstly adjusted to the rotational speed of the second input shaft, and then the clutch which has connected the engine (6) to the first input shaft is opened.

23. Method according to one of Claims 19 to 22, **characterized in that**, during a start of the engine (6), the following method steps are provided:
- braking an input shaft to zero if the input shaft is rotating;
- closing the clutch between the engine (6) and the input shaft; and
- cranking the engine by means of the auxiliary drive.

24. Method according to one of Claims 19 to 23, **characterized in that**, during a starting process of the motor vehicle, the following method steps are provided:
- disengaging the clutch between the engine (6) and at least one of the two input shafts;
- closing a gearshift clutch such that a torque is transmitted between the input shaft, which is separated from the engine (6), and the output shaft;
- driving the input shaft, which is separated from the engine (6), by means of the auxiliary drive.

25. Method according to Claim 24, **characterized in that** the clutch between the other input shaft and the drive output shaft of the engine is closed.

26. Method according to Claim 24, **characterized in that** the clutch between the other input shaft and the drive output shaft of the engine is closed only when a rotational speed of the engine is reached.

27. Method according to one of Claims 19 to 26, **characterized in that**, during reverse travel of the motor vehicle, at least one input shaft is driven by the auxiliary drive.

28. Method according to Claim 27, **characterized in that** the power required for reverse travel is provided at least partially generatively by the other auxiliary drives by virtue of the other auxiliary drive being fixedly connected to the engine.

29. Method according to one of Claims 19 to 28, **characterized in that**, during braking of the vehicle, the auxiliary drive collects energy and said energy is stored.

## Revendications

1. Transmission à double embrayage (1), en particulier pour un véhicule automobile, comprenant
- deux arbres d'entrée (2, 3) ;
- au moins un arbre de sortie (18) ;
- plusieurs paires de roues dentées avec des embrayages de changement de vitesses associés (22.1 à 22.6), une paire de roues dentées transmettant, lorsque l'embrayage de changement de vitesses est fermé, un couple entre l'un des arbres d'entrée (2, 3) et l'arbre de sortie (18) et constituant un rapport de vitesses de la transmission ;
- deux embrayages (4, 5), un embrayage (4, 5) transmettant à chaque fois, dans l'état fermé, un couple entre un moteur (6) et l'un des arbres d'entrée (2, 3) ; et
- un entraînement auxiliaire, qui est en liaison fonctionnelle avec au moins un arbre d'entrée (2, 3) ;
les embrayages (4, 5) étant réalisés sous forme d'embrayages par engagement positif et l'entraînement auxiliaire permettant de synchroniser le régime de l'un ou de l'autre des arbres d'entrée (3, 4) avec le régime du moteur (6), **caractérisée en ce que** l'entraînement auxiliaire comprend deux unités d'entraînement (7, 8) qui sont associées à chaque fois à un arbre d'entrée (2, 3), les unités d'entraînement (7, 8) pouvant être commandées indépendamment l'une de l'autre.

2. Transmission à double embrayage (1) selon la revendication 1, **caractérisée en ce que** l'entraînement auxiliaire comprend au moins un moteur électrique (7, 8).

3. Transmission à double embrayage (1) selon la revendication 1 ou 2, **caractérisée en ce que** l'entraînement auxiliaire peut fournir un couple dans deux directions opposées.

4. Transmission à double embrayage (1) selon l'une quelconque des revendications 1 à 3, **caractérisée en ce qu'**une paire de roues dentées se compose d'une roue fixe (20.1 à 20.6) connectée de manière solidaire en rotation à un premier arbre et d'une roue libre (21.1 à 21.6) s'engrènant avec la roue fixe, et pouvant être connectée de manière solidaire en rotation à un deuxième arbre.

5. Transmission à double embrayage (1) selon la revendication 4, **caractérisée en ce que** la roue libre (21.1 à 21.6) peut être connectée au deuxième arbre par le biais de l'embrayage de changement de vitesses associé (22.1 à 22.6), l'embrayage de changement de vitesses (22.1 à 22.6) étant réalisé sous forme d'embrayage à engagement positif non synchronisé.

6. Transmission à double embrayage (1) selon l'une quelconque des revendications 1 à 5, **caractérisée en ce qu'**au moins l'un des embrayages (4, 5) est réalisé sous forme d'embrayage à griffes.

7. Transmission à double embrayage (1) selon l'une quelconque des revendications 1 à 6, **caractérisée en ce que** l'entraînement auxiliaire permet de synchroniser le régime d'un arbre d'entrée (2, 3) avec le régime de l'arbre de sortie (18).

8. Transmission à double embrayage (1) selon l'une quelconque des revendications 1 à 7, **caractérisée en ce que** l'entraînement auxiliaire est en liaison fonctionnelle avec une roue fixe (20.5, 20.6) qui est connectée de manière solidaire en rotation à l'un des arbres d'entrée (2, 3).

9. Transmission à double embrayage (1) selon l'une quelconque des revendications 1 à 8, **caractérisée en ce que** les arbres d'entrée (2, 3) sont disposés co-axialement, un arbre d'entrée (3) étant réalisé sous forme d'arbre creux et l'autre arbre d'entrée (2) étant réalisé sous forme d'arbre intérieur.

10. Transmission à double embrayage (1) selon l'une quelconque des revendications 1 à 9, **caractérisée en ce que** l'un des arbres d'entrée (2) est associé à un premier groupe (11) de rapports de vitesses et l'autre des arbres d'entrée (3) est associé à un deuxième groupe (12) de rapports de vitesses.

11. Transmission à double embrayage (1) selon l'une quelconque des revendications 1 à 10, **caractérisée en ce que** la communication des embrayages (4, 5) et/ou des embrayages de changement de vitesses (22.1 à 22.6) s'effectue de manière électromécanique ou électromagnétique.

12. Transmission à double embrayage (1) selon l'une quelconque des revendications 1 à 11, **caractérisée en ce que** les embrayages (4, 5) et/ou les embrayages de changement de vitesses (22.1 à 22.6) présentent des roues libres connectées.

13. Transmission à double embrayage (1) selon l'une quelconque des revendications 1 à 12, **caractérisée en ce qu'**il est prévu un accumulateur d'énergie, lequel alimente en énergie au moins brièvement l'entraînement auxiliaire.

14. Transmission à double embrayage (1) selon la revendication 13, **caractérisée en ce que** l'accumulateur d'énergie présente une capacité d'au moins 20 Wh.

15. Transmission à double embrayage (1) selon la revendication 13 ou 14, **caractérisée en ce que** l'accumulateur d'énergie comprend une batterie NiMH.

16. Transmission à double embrayage (1) selon l'une quelconque des revendications 13 à 15, **caractérisée en ce que** l'accumulateur d'énergie comprend des condensateurs de grande puissance.

17. Transmission à double embrayage (1) selon l'une quelconque des revendications 1 à 16, **caractérisée en ce que** la puissance de l'entraînement auxiliaire est comprise entre 10 et 70 kW, de préférence vaut 40kW.

18. Transmission à double embrayage (1) selon l'une quelconque des revendications 1 à 17, **caractérisée en ce que** la puissance d'une unité d'entraînement (7, 8) est de 15 kW.

19. Procédé de commande de la transmission à double embrayage (1) selon l'une quelconque des revendications 1 à 18, **caractérisé en ce que** dans le cas du passage d'une vitesse source associée à un premier arbre d'entrée à une vitesse cible associée à un deuxième arbre d'entrée, on prévoit les étapes de procédé suivantes :
- accélération ou freinage du deuxième arbre d'entrée à un régime synchronisé correspondant au régime de l'embrayage de changement de vitesses associé à la vitesse cible ;
- fermeture de l'embrayage de changement de vitesses associé à la vitesse cible ;
- transmission du couple s'appliquant à l'arbre de sortie par l'entraînement auxiliaire ;
- ouverture de l'embrayage qui a connecté le moteur (6) au premier arbre d'entrée ;
- entraînement du moteur (6) au régime du deuxième arbre d'entrée ; et
- fermeture de l'embrayage entre le moteur (6) et le deuxième arbre d'entrée.

20. Procédé selon la revendication 19, **caractérisé en ce qu'**après la fermeture de l'embrayage entre le moteur (6) et le deuxième arbre d'entrée, l'embrayage de changement de vitesses de la vitesse cible est ouvert.

21. Procédé selon la revendication 19 ou 20, **caractérisé en ce que** le moteur (6) est entraîné par une gestion de moteur au régime du deuxième arbre d'entrée.

22. Procédé selon l'une quelconque des revendications 19 à 21, **caractérisé en ce que** l'entraînement auxiliaire permet d'entraîner le moteur (6) d'abord au régime du deuxième arbre d'entrée puis l'embrayage, qui a connecté le moteur (6) au premier arbre d'entrée, est ouvert.

23. Procédé selon l'une quelconque des revendications 19 à 22, **caractérisé en ce que** lors d'un démarrage du moteur (6), on prévoit les étapes de procédé suivantes :
- freinage d'un arbre d'entrée jusqu'à zéro, si l'arbre d'entrée est en rotation ;
- fermeture de l'embrayage entre le moteur (6) et l'arbre d'entrée ; et
- lancement du moteur par l'entraînement auxiliaire.

24. Procédé selon l'une quelconque des revendications 19 à 23, **caractérisé en ce que** lors du démarrage du véhicule automobile, on prévoit les étapes de procédé suivantes :
- séparation de l'embrayage entre le moteur (6) et au moins l'un des deux arbres d'entrée ;
- fermeture d'un embrayage de changement de vitesses, de sorte qu'un couple entre l'arbre d'entrée séparé du moteur (6) et l'arbre de sortie soit transmis ;
- entraînement de l'arbre d'entrée séparé du moteur (6) par l'entraînement auxiliaire.

25. Procédé selon la revendication 24, **caractérisé en ce que** l'embrayage entre l'autre arbre d'entrée et l'arbre de sortie du moteur est fermé.

26. Procédé selon la revendication 24, **caractérisé en ce que** l'embrayage entre l'autre arbre d'entrée et l'arbre de sortie du moteur est seulement fermé après qu'un régime du moteur a été atteint.

27. Procédé selon l'une quelconque des revendications 19 à 26, **caractérisé en ce que** dans le cas d'une conduite en marche arrière du véhicule automobile, au moins un arbre d'entrée est entraîné par l'entraînement auxiliaire.

28. Procédé selon la revendication 27, **caractérisé en ce que** la puissance requise pour la conduite en marche arrière est fournie au moins en partie par l'autre entraînement auxiliaire servant de générateur, l'autre entraînement auxiliaire étant connecté fixement au moteur.

29. Procédé selon l'une quelconque des revendications 19 à 28, **caractérisé en ce que**, lors du freinage du véhicule, l'entraînement auxiliaire reçoit de l'énergie et stocke cette énergie.
